# FASCICULE DE BREVET EUROPEEN

(11) **EP 0 769 409 B1**
(45) Date de publication et mention de la délivrance du brevet: **23.06.1999**
(21) Numéro de dépôt: 96402141.4
(22) Date de dépôt: 09.10.1996
(51) Int. Cl.: B60N 2/22

(54) **Articulation pour siège de véhicule automobile**
Gelenkbeschlag für Kraftfahrzeugsitze
Hinge mechanism for motor vehicle seats

(30) Priorité: 17.10.1995 FR 9512159
(43) Date de publication de la demande: 23.04.1997
(73) Titulaire: CESA COMPAGNIE EUROPEENNE DE SIEGES POUR AUTOMOBILES, 92307 Levallois-Perret Cédex (FR)
(72) Inventeur: Barrere, Eric, 45290 Nogent sur Vernisson (FR); Delatte, Olivier, 45290 Nogent sur Vernisson (FR); Fourrey, François, 45290 Nogent sur Vernisson (FR); Blanchard, Jean Marie, 45290 Nogent sur Vernisson (FR); Di Luccio, Michel, 45290 Nogent sur Vernisson (FR)
(74) Mandataire: Moncheny, Michel

(56) Documents cités:
- EP-A- 0 024 976
- EP-A- 0 691 238
- FR-A- 2 494 574
- FR-A- 2 626 154
- GB-A- 2 241 884
- US-A- 4 076 309
- US-A- 4 082 352
- US-A- 4 997 223

## Description

La présente invention concerne une articulation pour siège et un siège pour véhicule muni de cette articulation.

On connaît déjà dans l'état de la technique une articulation pour siège, notamment pour véhicule automobile, du type comprenant :
- deux flasques sensiblement parallèles dont l'un, fixe, est destiné à être fixé à une assise du siège, et l'autre, mobile, est destiné à être fixé à un dossier du siège, ces flasques étant rotatifs l'un par rapport à l'autre autour d'un axe d'articulation X qui leur est perpendiculaire, et
- des moyens de couplage des flasques entre eux commandés par un organe actionnable dans un sens de réglage de l'inclinaison du dossier par rapport à l'assise et dans un sens opposé au précédent de rabattement temporaire de ce dossier.

Une telle articulation est décrite par exemple dans FR-A-2.494.574.

Dans le cas d'un siège avant de véhicule automobile muni d'une articulation de ce type, appelée habituellement articulation à mémoire, il est possible de rabattre le dossier sur l'assise, afin d'accéder aux places arrière du véhicule, et de relever ce dossier en position d'utilisation, ceci sans modifier le réglage d'inclinaison du dossier.

L'articulation telle que décrite dans le document précité comporte un nombre relativement important de composants favorisant l'apparition de jeux indésirables.

L'invention a pour but de proposer une articulation compacte et robuste, comportant notamment un nombre réduit de composants de manière à éviter l'apparition de jeux indésirables résultant de l'usure de l'articulation.

A cet effet, l'invention a pour objet une articulation pour siège, notamment pour véhicule automobile, du type précité, caractérisée en ce que les moyens de couplage comprennent au moins un levier muni de deux extrémités dont chacune est susceptible d'être directement assujettie à un flasque associé par coopération de formes complémentaires, l'organe de commande des moyens de couplage actionnant des moyens de manoeuvre du levier assujettissant le levier à l'un ou l'autre des flasques seulement, selon le sens d'actionnement de l'organe de commande, par basculement du levier autour d'un point d'appui matérialisé par les formes complémentaires d'assujettissement de l'une ou l'autre extrémité du levier avec son flasque associé.

Suivant des caractéristiques de différents modes de réalisation de l'invention :
- les moyens de manoeuvre comprennent des moyens d'assujettissement des extrémités du levier aux flasques associés, et des moyens de basculement du levier entre une position de repos, dans laquelle les deux extrémités du levier sont assujetties aux deux flasques associés pour coupler ces derniers, et deux positions alternatives de basculement, dans lesquelles une extrémité du levier est assujettie au flasque associé, pour prendre appui sur ce dernier, et l'autre extrémité est libérée de ce flasque, de manière à permettre, selon le cas, le réglage de l'inclinaison ou le rabattement temporaire du dossier;
- les moyens d'assujettissement des extrémités du levier comprennent une came rotative d'appui associée à chaque extrémité du levier, rappelée élastiquement au contact d'une contre-came d'appui solidaire de l'extrémité du levier pour maintenir celle-ci assujettie au flasque associé,
   et les moyens de basculement du levier comprennent des moyens de dégagement de la came d'appui associée à l'extrémité à libérer du levier, s'opposant à la force élastique de rappel de cette came d'appui, et des moyens de poussée de l'extrémité en appui du levier ;
- chaque extrémité du levier comprend une butée de limitation de basculement destinée à coopérer avec une butée complémentaire solidaire d'une came d'appui ;
- les moyens de poussée d'une extrémité en appui du levier comprennent la came d'appui associée à cette extrémité en appui coopérant avec la contre-came d'appui solidaire de cette même extrémité ;
- les moyens de poussée d'une extrémité en appui du levier comprennent une came de poussée solidaire de la came d'appui associée à l'extrémité à libérer du levier, coopérant avec une contre-came de poussée solidaire de l'extrémité en appui du levier ;
- chaque extrémité du levier comporte une came de décalage angulaire de la came d'appui associée à l'autre extrémité du levier dans le sens de dégagement de cette came d'appui, cette came de décalage angulaire coopérant avec une contre-came de décalage angulaire solidaire de cette came d'appui, lorsque l'extrémité du levier est libérée de son flasque associé ;
- le levier a une forme générale en arc s'étendant sensiblement parallèlement aux flasques les extrémités du levier étant décalées l'une par rapport à l'autre parallèlement à l'axe d'articulation X, les formes complémentaires d'assujettissement étant ménagées sur les contours extérieurs du levier et sur les contours intérieurs d'épaulements périphériques ménagés dans les flasques et décalés l'un par rapport à l'autre parallèlement à l'axe d'articulation X,
   les cames d'appui sont délimitées par des bossages ménagés sur le contour extérieur de bagues rotatives associées à chaque extrémité du levier, centrées sensiblement sur l'axe d'articulation X et superposées suivant cet axe, les contre-cames d'appui étant ménagées sur le contour intérieur du levier,
   et les moyens de dégagement des cames d'appui comprennent une came de dégagement montée rotative autour de l'axe d'articulation X et destinée à coopérer sélectivement avec deux contre-cames de dégagement ménagées sur le contour interne des deux bagues respectivement, la came de dégagement étant interposée entre les contre-cames de dégagement de préférence avec un jeu angulaire de part et d'autre de cette came ;
- la butée de limitation de basculement associée à une extrémité du levier est solidaire de la came d'appui associée à cette extrémité du levier,
   et les butées de limitation de basculement sont délimitées par des bossages d'extrémité ménagés sur le contour intérieur du levier, et les butées complémentaires de limitation de basculement sont délimitées par des évidements ménagés sur le contour extérieur des bagues ;
- la butée complémentaire de limitation de basculement associée à une extrémité du levier est solidaire de la came d'appui associée à l'autre extrémité du levier,
   les butées de limitation de basculement sont délimitées par des doigts portés par des pieds prolongeant sensiblement radialement vers l'intérieur les extrémités des leviers, et les butées complémentaires de limitation de basculement sont délimitées par des évidements ménagés sur le contour extérieur des bagues chaque doigt s'étendant parallèlement à l'axe d'articulation X de manière à rattraper le décalage axial entre l'extrémité du levier qui le porte et l'autre extrémité de ce levier,
   et les cames de poussée sont délimitées par des bossages ménagés sur le contour extérieur des bagues et les contre-cames de poussée sont délimitées par les doigts axiaux ;
- les cames de décalage angulaire sont délimitées par des portions de contour des doigts axiaux, formant des rampes, et les contre-cames de décalage angulaire sont délimitées par des portions de contour des évidements de limitation de basculement, formant des rampes complémentaires des précédentes ;
- les contre-cames de dégagement sont délimitées par des ergots d'accrochage d'un ressort de rappel à effet angulaire, sollicitant les bagues dans des sens opposés vers des positions de coopération des cames et contre-cames d'appui ;
- les moyens de poussée d'une extrémité en appui du levier comprennent, en outre, des cames d'entraînement décalé des bagues, solidaires de la came de dégagement, s'étendant de part et d'autre angulairement de cette came de dégagement, de manière que chaque contre-came de dégagement s'étende entre la came de dégagement et une came d'entraînement décalé avec un jeu angulaire permettant, lors de la rotation des cames de dégagement et d'entraînement, un entraînement décalé des contre-cames de dégagement provoquant, d'abord le dégagement de la came d'appui associée à l'extrémité à libérer du levier, puis la poussée de l'extrémité en appui du levier ;
- les flasques et les bagues sont centrés les uns par rapport aux autres par des épaulements circulaires complémentaires ménagés dans ces éléments, sensiblement coaxiaux à l'axe d'articulation X ;
- un organe d'entretoisement est interposé entre les bagues ;
- les formes complémentaires d'assujettissement des extrémités du levier aux flasques comprennent des dentures complémentaires ;
- chaque extrémité du levier comprend un secteur denté d'assujettissement, le secteur denté d'une première extrémité du levier étant destiné à coopérer avec un secteur denté de même angle du flasque fixe, et le secteur denté de la seconde extrémité du levier étant destiné à coopérer avec un secteur denté d'angle supérieur du flasque mobile ;
- le secteur denté du flasque mobile forme une couronne dentée ;
- les extrémités opposées des secteurs dentés du levier comprennent des zones dentées de renfort d'appui du levier, l'une ou l'autre de ces zones ne coopérant avec le secteur denté du flasque associé que lorsque le levier est dans l'une ou l'autre de deux positions de basculement ;
- les moyens de couplage comprennent deux leviers;
- les leviers ainsi que leurs moyens de manoeuvre sont, de façon générale, symétriques par rapport à l'axe d'articulation X ;
- les extrémités rapprochées des leviers sont reliées entre elles par des épingles élastiques sollicitant ces extrémités en position d'assujettissement aux flasques associés ;
- l'organe d'entretoisement forme également organe de synchronisation des leviers et comprend à cet effet deux fourches d'extrémité, diamétralement opposées, destinées à coopérer avec des épaulements de décalage axial des extrémités des leviers et avec le contour intérieur des leviers, lorsque ces derniers sont basculés ;
- les flasques ont une forme générale circulaire et sont centrés l'un par rapport à l'autre par des épaulements périphériques complémentaires coaxiaux à l'axe d'articulation X ;
- l'articulation comprend des moyens de limitation de la course de réglage d'inclinaison du dossier, et des moyens de limitation de la course de rabattement temporaire du dossier ;
- les moyens de limitation de la course de réglage d'inclinaison du dossier comprennent une butée de limitation d'inclinaison de dossier solidaire du flasque mobile destinée à coopérer avec deux butées complémentaires d'extrémité de course délimitées, l'une par un épaulement de décalage axial des deux extrémités d'un premier levier et l'autre par l'extrémité du second levier associée au flasque mobile ;
- les moyens de limitation de la course de rabattement temporaire du dossier comprennent une première butée d'extrémité de course, solidaire du flasque fixe, destinée à coopérer avec l'extrémité du levier associée à ce flasque fixe, et une seconde butée d'extrémité de course, solidaire du flasque mobile, destinée à coopérer avec une butée fixe complémentaire ;
- sur chaque bague, un évidement formant butée complémentaire de limitation de basculement du levier est comblé pour interdire le basculement de ce levier dans sa position autorisant le rabattement temporaire du dossier.

L'invention a également pour objet un siège pour véhicule muni d'au moins une articulation telle que définie ci-dessus.

L'invention sera mieux comprise à la lecture de la description qui va suivre donnée uniquement à titre d'exemple et faite en se référant aux dessins annexés dans lesquels :
- la figure 1 est une vue en perspective d'un siège pour véhicule automobile muni d'au moins une articulation selon l'invention ;
- la figure 2 est une vue en perspective d'une articulation pour siège selon un premier mode de réalisation de l'invention ;
- la figure 3 est une vue éclatée de l'articulation représentée à la figure 2 ;
- la figure 4 est une vue de face de l'articulation représentée à la figure 2, avec un arrachement du flasque mobile donnant accès visuellement à l'intérieur de l'articulation ;
- les figures 5 et 6 sont des vues similaires à la figure 4 dans deux configurations successives de l'articulation au cours d'une manoeuvre de rabattement temporaire du dossier ;
- les figures 7 et 8 sont des vues similaires à la figure 4, à échelle légèrement agrandie, dans deux configurations successives de l'articulation au cours d'une manoeuvre de réglage de l'inclinaison du dossier ;
- la figure 9 est une vue similaire à la figure 4 d'une articulation selon un second mode de réalisation de l'invention ;
- les figures 10 et 11 sont des vues similaires respectivement aux figures 5 et 7 de l'articulation selon le second mode de réalisation.

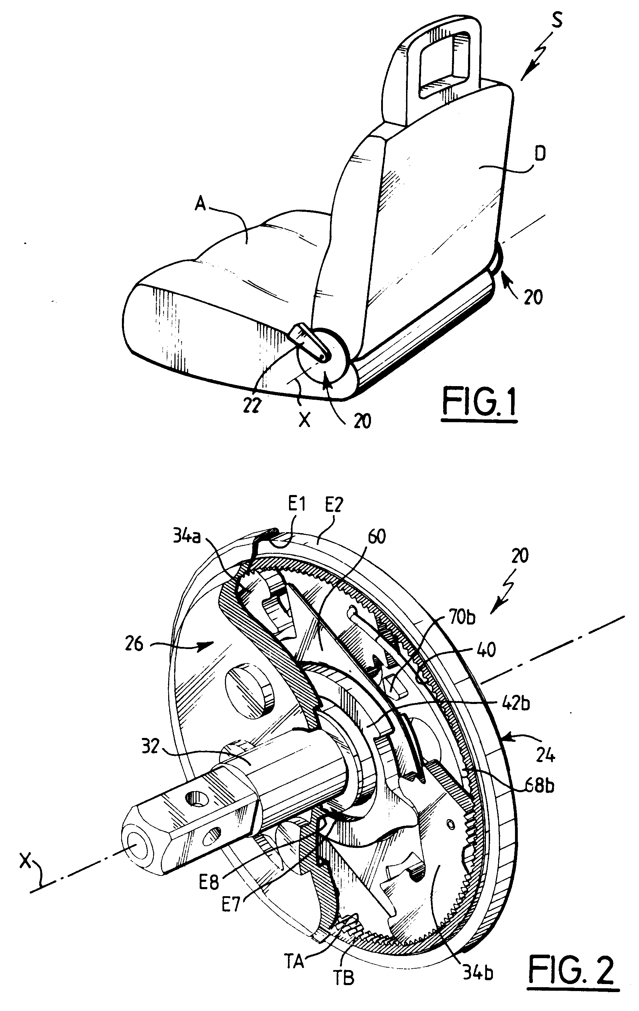

On a représenté sur la figure 1 un siège S pour véhicule automobile comportant un dossier D relié à une assise A par deux articulations 20 selon l'invention.

Chaque articulation 20 est la symétrique spéculaire de l'autre articulation.

Les articulations 20 sont commandées de préférence par une poignée 22 commune à ces deux articulations.

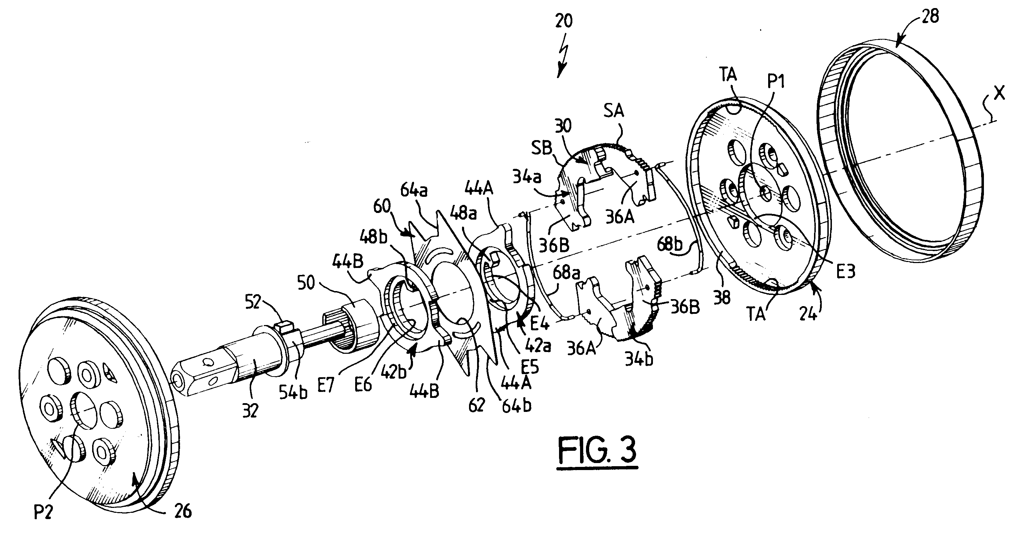

En se référant notamment aux figures 2 et 3, sur lesquelles on a représenté une articulation 20 plus en détail, on voit que celle-ci comporte deux flasques 24, 26 de forme générale circulaire, l'un, fixe, étant fixé sur l'assise A, et l'autre, mobile, étant fixé sur le dossier D.

Les flasques 24, 26 sont montés rotatifs l'un par rapport à l'autre autour d'un axe d'articulation X qui leur est perpendiculaire, et sont maintenus l'un contre l'autre de façon connue en soi au moyen d'une bague de liaison 28.

Les flasques 24, 26 sont centrés l'un par rapport à l'autre par des épaulements périphériques complémentaires E1, E2, coaxiaux à l'axe d'articulation X.

Les flasques 24, 26 délimitent entre eux un logement pour des moyens 30 de couplage de ces flasques. Ces moyens 30 sont commandés par un organe 32 formant broche, sur lequel est fixée de façon connue en soi la poignée de commande 22.

L'organe de commande 32 est monté rotatif autour de l'axe d'articulation X en étant porté par exemple par des paliers P1, P2 ménagés dans les flasques 24, 26.

L'organe de commande 32 est actionnable, par l'intermédiaire de la poignée 22, dans deux sens opposés, à savoir un sens horaire de réglage de l'inclinaison du dossier par rapport à l'assise et un sens anti-horaire de rabattement de ce dossier.

Les organes de commande 32 des deux articulations 20 sont reliés entre eux par un dispositif de couplage classique.

Les moyens de couplage 30 comprennent deux leviers 34a, 34b en forme générale d'arcs s'étendant sensiblement parallèlement aux flasques 24, 26. Ces leviers 34a, 34b sont symétriques par rapport à l'axe d'articulation X et identiques.

Chaque levier 34a, 34b est muni de deux extrémités 36A, 36B dont chacune est susceptible d'être directement assujettie à un flasque 24, 26 associé par coopération de formes complémentaires délimitées de préférence par des dentures complémentaires.

Les extrémités 36A, 36B de chaque levier 34a, 34b sont décalées l'une par rapport à l'autre, parallèlement à l'axe d'articulation X.

Les extrémités des leviers comportent chacune un secteur denté SA, SB d'assujettissement ménagé sur le contour extérieur des leviers. De préférence, les secteurs dentés SA, SB comportent une partie commune dans une zone centrale des leviers d'épaisseur maximale.

Les secteurs dentés SA de premières extrémités 36A des leviers sont destinées à coopérer avec des secteurs dentés TA de même angle ménagés sur le contour intérieur d'un épaulement périphérique 38 du flasque fixe 24, visible notamment sur la figure 3.

Les secteurs dentés SB de secondes extrémités 36B des leviers sont destinées à coopérer avec un secteur denté TB d'angle supérieur ménagé sur le contour intérieur d'un épaulement périphérique 40 du flasque mobile, visible notamment sur la figure 2. De préférence, ce secteur denté TB forme une couronne dentée.

On notera que les épaulements périphériques 38, 40 ménagés dans les flasques 24, 26, sont décalés l'un par rapport à l'autre parallèlement à l'axe d'articulation X.

L'organe de commande 32 actionne des moyens de manoeuvre des leviers 34a, 34b qui seront décrits ci-dessous. Ces moyens de manoeuvre sont, de façon générale, symétriques par rapport à l'axe d'articulation X.

Les moyens de manoeuvre assujettissent chaque levier 34a, 34b à l'un ou l'autre des flasques 24, 26 seulement, selon le sens de rotation de l'organe de commande 32, par basculement du levier 34a, 34b autour d'un point d'appui matérialisé par les dentures complémentaires de l'une ou l'autre extrémité 36A, 36B du levier et de son flasque 24, 26 associé.

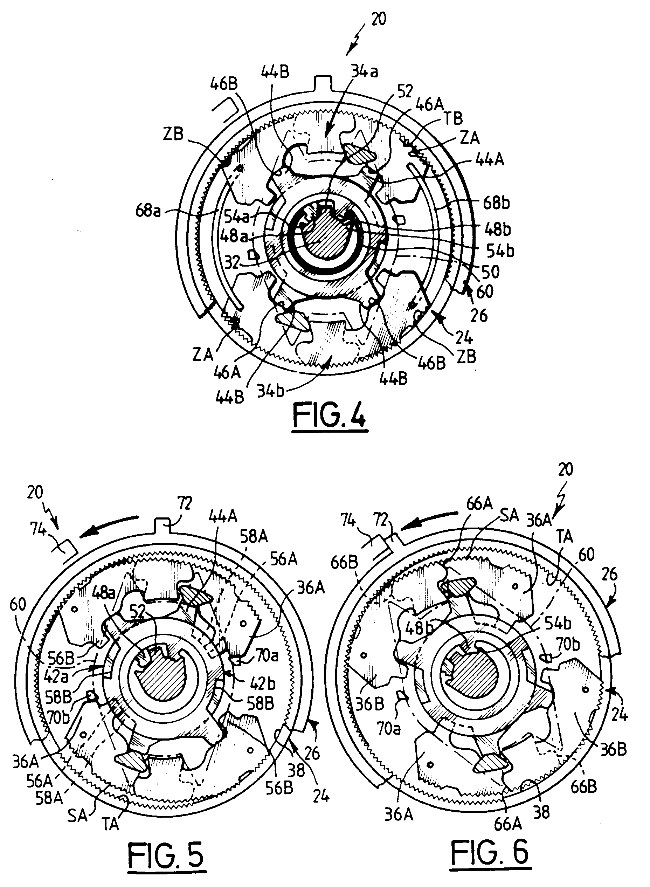

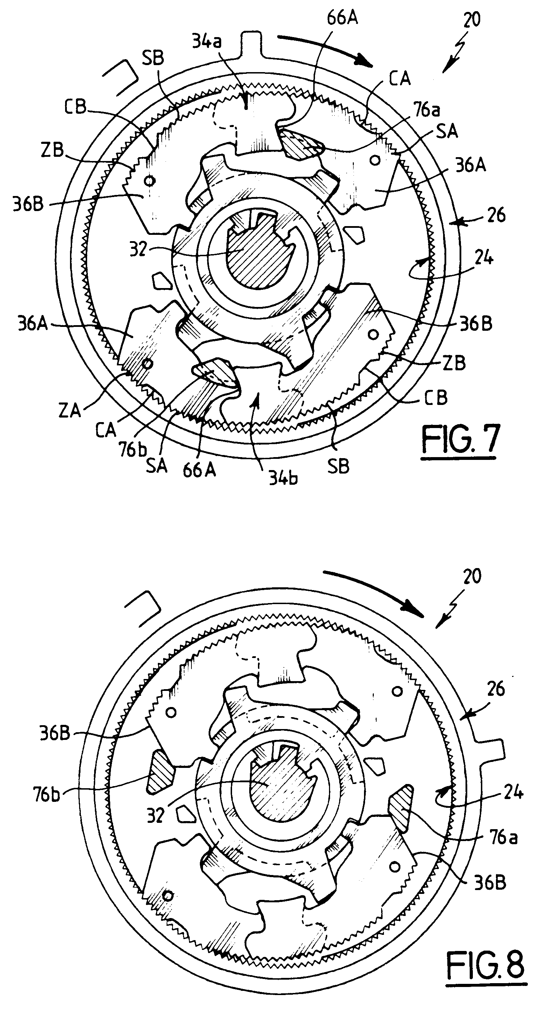

Les moyens de manoeuvre comprennent des moyens d'assujettissement des extrémités 36A, 36B des leviers aux flasques 24, 26 associés et des moyens de basculement des leviers entre une position de repos, telle que représentée à la figure 4, et deux positions alternatives de basculement, telles que représentées aux figures 6 et 8.

Lorsqu'un levier est en position de repos, les deux extrémités 36A, 36B de celui-ci sont engrenées dans les dentures correspondantes des flasques associés pour coupler ces derniers et, ainsi, immobiliser le dossier par rapport à l'assise.

Lorsqu'un levier 34a, 34b est dans une de ses positions alternatives de basculement, une extrémité 36A, 36B de ce levier est engrenée dans la denture correspondante TA, TB du flasque 24, 26 associé pour prendre appui sur cette denture, et l'autre extrémité 36B, 36A de ce levier est libérée de ce même flasque 24, 26, de manière à permettre, selon le cas, le réglage de l'inclinaison ou le rabattement temporaire du dossier.

Les moyens d'assujettissement des extrémités 36A, 36B des leviers aux flasques associés 24, 26 comprennent deux bagues rotatives 42a, 42b centrées sensiblement sur l'axe d'articulation X et superposées suivant cet axe.

Les flasques 24, 26 et les bagues 42a, 42b sont centrés les uns par rapport aux autres, éventuellement avec jeu, par des épaulements circulaires complémentaires E3 à E8 ménagés dans ces éléments, sensiblement coaxiaux à l'axe d'articulation X (voir figures 2 et 3).

Chaque bague 42a, 42b comprend une paire de cames d'appui 44A, 44B, diamétralement opposées, délimitées par des bossages ménagés sur le contour extérieur de la bague.

Les cames d'appui 44A (respectivement 44B) d'une première bague 42a (respectivement de la seconde bague 42b) sont associées à des premières extrémités 36A des leviers (respectivement les secondes extrémités 36B) symétriques par rapport à l'axe d'articulation X.

Les cames d'appui 44A, 44B sont destinées à coopérer avec des contre-cames d'appui 46A, 46B ménagées sur le contour intérieur des extrémités 36A, 36B des leviers auxquelles elles sont associées pour maintenir ces extrémités engrenées dans les dentures des flasques 24, 26.

Les bagues 42a, 42b comprennent chacune un ergot 48a, 48b ménagé sur leur contour intérieur, destiné à l'accrochage d'un ressort de rappel 50 à effet angulaire sollicitant les bagues dans des sens opposés, vers des positions de coopération des cames et contre-cames d'appui.

Le ressort 50 est constitué par exemple par un anneau fendu dont les bords axiaux sont accrochés dans les ergots 48a, 48b.

On notera que pour des raisons de clarté, le ressort 50 n'est pas représenté sur les figures 5 à 8.

L'anneau 50 participe au centrage des bagues 42a, 42b et peut éventuellement remplacer les épaulements E4 à E7 de centrage de ces bagues.

Les moyens de basculement des leviers 34a, 34b comprennent des moyens de dégagement des cames d'appui associés aux extrémités à libérer des leviers, s'opposant à la force élastique de rappel de ces cames d'appui, et des moyens de poussée des extrémités en appui des leviers.

Les moyens de dégagement des cames d'appui comprennent une came de dégagement 52 solidaire de l'organe de commande 32, destinée à coopérer sélectivement avec les deux ergots 48a, 48b, formant contre-cames de dégagement, entre lesquels cette came de dégagement 52 est interposée de préférence avec un jeu angulaire de part et d'autre de cette came 52.

Ce jeu angulaire permet de s'affranchir des tolérances mécaniques du dispositif de couplage des organes de commande 32 des deux articulations 20 tout en permettant une bonne synchronisation des couplage et découplage des flasques 24,26 des deux articulations.

Comme cela ressortira plus clairement de la description du fonctionnement de l'articulation faite par la suite, les moyens de poussée d'une extrémité en appui d'un levier comprennent, dans ce premier mode de réalisation de l'invention, la came d'appui 44A, 44B associée à cette extrémité en appui coopérant avec la contre-came d'appui 46A, 46B solidaire de cette même extrémité.

Les moyens de poussée comprennent en outre des cames 54a, 54b d'entraînement décalé des bagues, solidaires de l'organe de commande 32, s'étendant de part et d'autre angulairement de la came de dégagement 52, de manière que chaque ergot 48a, 48b s'étende entre la came de dégagement 52 et une came d'entraînement 54a, 54b avec un jeu angulaire.

Ce jeu angulaire permet, lors de la rotation de l'organe de commande 32, un entraînement décalé d'un premier puis d'un second ergot 48a, 48b provoquant ainsi, d'abord le dégagement des cames d'appui 44A, 44B associées aux extrémités à libérer 36A, 36B des leviers, puis la poussée des extrémités en appui 36B, 36A de ces leviers.

Chaque extrémité 36A, 36B des leviers comporte une butée 56A, 56B de limitation de basculement, délimitée par un bossage d'extrémité ménagé sur le contour intérieur de cette extrémité, destinée à coopérer avec une butée complémentaire délimitée par un évidement 58A, 58B ménagé sur le contour extérieur de la bague 48a, 48b portant la came d'appui 44A, 44B associée à l'extrémité du levier.

On notera donc que la butée complémentaire de limitation de basculement d'un levier, associée à une extrémité de ce levier, est solidaire de la came d'appui associée à cette extrémité du levier.

En se référant à la figure 3, on voit qu'un organe d'entretoisement 60 est interposé entre les bagues 42a, 42b. Cet organe 60 empêche l'interaction d'une bague 42a, 42b avec une extrémité 36A, 36B des leviers qui ne lui est pas associée.

L'organe d'entretoisement 60 est fabriqué par exemple dans une tôle mince et comporte un orifice central circulaire 62 de centrage destiné à coopérer avec un épaulement de centrage d'une des bagues 42a, 42b.

Pour des raisons de clarté, l'organe d'entretoisement 60 est représenté en traits mixtes sur les figures 4 à 6 et n'est pas représenté sur les figures 7 et 8.

L'organe d'entretoisement 60 forme également organe de synchronisation du mouvement des leviers 34a, 34b et comprend, à cet effet, deux fourches d'extrémité 64a, 64b, diamétralement opposées, destinées à coopérer avec des épaulements 66A, 66B de décalage axial des extrémités 36A, 36B des leviers et avec le contour intérieur de ces leviers, lorsque ces derniers sont basculés (voir notamment figure 6).

Ainsi, au cours du basculement des leviers 34a, 34b, chaque fourche 64a, 64b de l'organe 60 est en contact, en trois points, avec le levier correspondant de manière à former à ce moment un ensemble leviers-organe de synchronisation indéformable.

En se référant aux figures 3 et 4, on voit que les extrémités rapprochées 36A, 36B des leviers sont reliées entre elles par des épingles élastiques 68a, 68b, formant ressorts, sollicitant ces extrémités en position d'engrènement avec les flasques associés 24, 26.

Pour des raisons de clarté, les épingles 68a, 68b n'ont pas été représentées sur les figures 5 à 8.

L'articulation 20 comprend des moyens de limitation de la course de réglage d'inclinaison du dossier et des moyens de limitation de la course de rabattement temporaire du dossier qui sont représentés notamment aux figures 4 à 8.

Les moyens de limitation de la course de rabattement temporaire du dossier comprennent une première butée d'extrémité de course 70a, 70b, associée à chaque levier 34a, 34b, solidaire du flasque fixe 24 et destinée à coopérer avec les extrémités 36A des leviers destinés à engrener avec le flasque fixe 24 (voir notamment figure 5).

Les moyens de limitation de la course de rabattement comprennent en outre une seconde butée d'extrémité de course 72, délimitée par un bossage formé sur le contour extérieur du flasque mobile 26, destinée à coopérer avec une butée d'extrémité de course complémentaire 74 qui est fixe et qui est agencée à l'extérieur des flasques 24, 26 (voir notamment figures 5 et 6).

Les moyens de limitation de la course de réglage d'inclinaison du dossier comprennent deux butées 76a, 76b, diamétralement opposées, de limitation d'inclinaison de dossier, solidaires du flasque mobile 26. Chacune de ces butées 76a, 76b est destinée à coopérer avec deux butées complémentaires d'extrémité de course délimitées l'une, par un épaulement 66A de décalage axial des deux extrémités d'un premier levier 34a, 34b, et l'autre, par l'extrémité 36B du second levier 34b, 34a destinée à engrener avec le flasque mobile 26 (voir notamment figures 7 et 8).

Les extrémités opposées des deux secteurs dentés SA, SB d'un levier 34a, 34b comprennent des zones dentées ZA, ZB de renfort d'appui du levier. L'une ou l'autre de ces zones ZA, ZB n'engrène avec le secteur denté TA, TB du flasque 24, 26 associé que lorsque les leviers sont dans l'une ou l'autre de leurs deux positions de basculement (voir notamment figures 4 et 7).

Les zones de renfort d'appui ZA, ZB sont séparées du reste des secteurs dentés SA, SB, par des évidements lisses CA, CB.

Les dents délimitant les extrémités des évidements lisses CA, CB les plus éloignées des zones ZA, ZB, matérialisent, avec des dents complémentaires des flasques associés, les points d'appui autour desquels les leviers 34a, 34b peuvent basculer.

Bien entendu, les zones dentées ZA, ZB sont facultatives mais renforcent avantageusement l'appui des leviers 34a, 34b lorsque ces derniers sont dans leurs positions basculées. Les zones dentées ZA, ZB participent par conséquent à l'optimisation de la robustesse de l'articulation.

On décrira maintenant le fonctionnement de l'articulation 20 en se référant aux figures 4 à 8.

Sur ces figures, le flasque fixe 24 est représenté derrière le flasque mobile 26, ce dernier étant partiellement arraché.

Initialement, l'articulation 20 est au repos dans la configuration illustrée à la figure 4.

Les leviers 34a, 34b sont en position de repos, le ressort 50 et les épingles 68a, 68b sollicitant les cames d'appui 44A, 44B au contact des contre-cames 46A, 46B, de manière que les leviers 34a, 34b engrènent avec les deux flasques 24, 26 à la fois. Ces derniers sont donc couplés entre eux et le dossier du siège est immobilisé en position normale d'utilisation.

Pour rabattre temporairement le dossier, on actionne la poignée 22 de manière à entraîner l'organe de commande 32 dans le sens anti-horaire représenté par une flèche sur les figures 5 et 6.

La came de dégagement 52 entraîne alors la bague inférieure 42a par l'intermédiaire de son ergot 48a de manière à dégager les cames d'appui 44A des extrémités inférieures 36A des leviers. Puis la came d'entraînement 54B entraîne la bague supérieure 42b par l'intermédiaire de son ergot 48b de manière à pousser les extrémités supérieures 36B des leviers en appui contre le flasque mobile 26, par l'intermédiaire des cames d'appui 44B de la bague supérieure 42b. On libère ainsi, du flasque fixe 24, les extrémités inférieures 36A des leviers, et on assujettit les extrémités supérieures 36B de ces leviers au flasque mobile 26.

On notera qu'à l'instant où les extrémités inférieures 36A des leviers sont libérées, ces dernières sont en contact avec les butées 70a, 70b pour interdire le mouvement du dossier dans le sens horaire (voir figure 5).

En prolongeant le mouvement de rotation de l'organe de commande 32 dans le sens horaire, on entraîne le flasque mobile 26 dans le même sens par l'intermédiaire de la bague supérieure 42b entraînant les leviers couplés uniquement à ce flasque mobile.

On peut ainsi rabattre le dossier jusqu'à ce que l'articulation 20 soit dans la configuration représentée à la figure 6 imposée par les butées complémentaires 72, 74 en contact entre elles.

On notera que dans les configurations de l'articulation 20 représentées aux figures 5 et 6, les cames 56A de limitation de basculement des leviers sont engagées dans les évidements 58A de la bague inférieure 42a.

Au cours du mouvement de rabattement du dossier, on peut relâcher la poignée 22. Les extrémités inférieures 36A des leviers sont alors sollicitées élastiquement par le ressort 50 et les épingles 68a, 68b au contact du contour intérieur de l'épaulement périphérique 38 du flasque fixe. Toutefois, ce contour étant lisse en dehors des secteurs dentées TA, les secteurs dentés SA des extrémités inférieures 36A des leviers glissent sur ce contour et n'engrènent avec le flasque fixe 24 que lorsque le dossier est ramené dans sa position normale d'utilisation. En effet, dans cette position, les secteurs dentés complémentaires SA et TA coïncident et peuvent s'engrener l'un dans l'autre.

Etant donné qu'au cours du rabattement du dossier, la position relative des leviers et du flasque mobile ne varie pas, les leviers ne pouvant être couplés avec le flasque fixe que lorsqu'ils se trouvent dans une position unique imposée par les secteurs dentés TA de ce flasque, le réglage du dossier par rapport à l'assise n'est pas modifié.

Pour régler l'inclinaison du dossier par rapport à l'assise, on actionne la poignée 22 dans le sens inverse au cas précédent, de manière à entraîner l'organe de commande 32 dans le sens horaire représenté par une flèche sur les figures 7 et 8.

Dans ce cas, la rotation de l'organe de commande 32 permet, de façon analogue au cas précédent, d'assujettir les extrémités inférieures 36A des leviers au flasque fixe 24, et de libérer, du flasque mobile 26, les extrémités supérieures 36B de ces leviers.

Le flasque mobile 26 peut alors tourner librement ainsi que le dossier auquel il est fixé, ce qui permet de déplacer le dossier pour lui donner une inclinaison souhaitée. Le déplacement du dossier modifie la position relative des leviers et du flasque mobile.

Le dossier est immobilisé dans la position sélectionnée en relâchant la poignée 22 ce qui a pour effet de ramener l'articulation 20 dans sa configuration telle que représentée à la figure 4, sous l'effet des forces élastiques de rappel du ressort 50 et des épingles 68a, 68b.

Le réglage de l'inclinaison du dossier est limité par les deux configurations extrêmes de l'articulation 20 représentées, d'une part, à la figure 7 représentant les butées 76a, 76b de limitation d'inclinaison de dossier en contact avec les épaulements 66A, et d'autre part, à la figure 8 représentant ces mêmes butées 76a, 76b en contact avec les extrémités supérieures 36B des leviers.

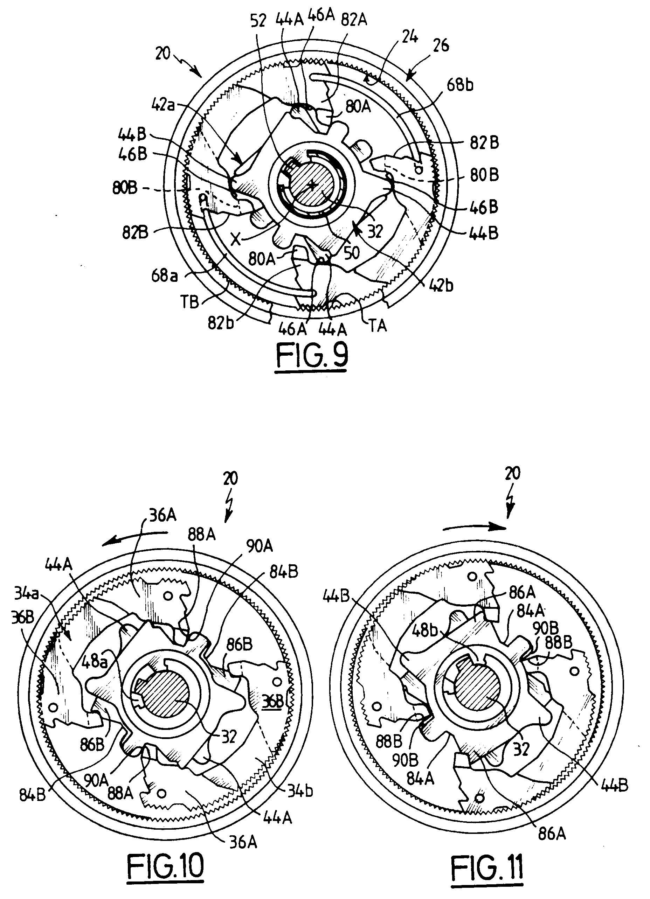

On a représenté sur les figures 9 à 11 une articulation 20 selon un second mode de réalisation de l'invention.

Sur ces figures, les éléments analogues à ceux des figures précédentes sont désignés par des références identiques.

Pour des raisons de clarté, on n'a pas représenté sur ces figures les moyens de limitation de la course de réglage d'inclinaison du dossier et les moyens de limitation de la course de rabattement temporaire du dossier.

Pour les mêmes raisons, le ressort 50 et les épingles 68a, 68b ne sont pas représentés sur les figures 10 et 11.

Dans ce cas, la butée complémentaire de limitation de basculement d'un levier, associée à une extrémité de ce levier, est solidaire de la came d'appui associée à l'autre extrémité du levier.

En effet, les butées de limitation de basculement sont délimitées par des doigts 80A, 80B portés par des pieds 82A, 82B prolongeant sensiblement radialement vers l'intérieur les extrémités 36A, 36B des leviers.

Chaque doigt 80A, 80B s'étend parallèlement à l'axe d'articulation X, de manière à rattraper le décalage axial entre l'extrémité 36A, 36B du levier qui le porte et l'autre extrémité 36B, 36A de ce levier.

Les butées complémentaires de limitation de basculement des leviers sont délimitées par des évidements 84A, 84B ménagés sur le contour extérieur des bagues 42a, 42b (voir notamment figures 10 et 11).

Dans ce second mode de réalisation de l'invention, les moyens de poussée d'une extrémité 36A, 36B en appui d'un levier comprennent une came de poussée 86A, 86B délimitée par un bossage ménagé sur le contour extérieur de la bague 42b, 42a portant la came d'appui 44B, 44A associée à l'extrémité 36B, 36A à libérer du levier.

Chaque came de poussée 86A, 86B est destinée à coopérer avec une contre-came de poussée délimitée par le doigt axial 80A, 80B solidaire de l'extrémité en appui du levier associée à la came de poussée.

Afin de faciliter le retour en position de repos des leviers 42a, 42b à partir de leurs positions alternatives de basculement, chaque extrémité 36A, 36B d'un levier comporte une came 88A, 88B de décalage angulaire de la came d'appui 44B, 44A associée à l'autre extrémité 36B, 36A du levier dans le sens de dégagement de cette came d'appui 44B, 44A.

Chaque came de décalage angulaire 88A, 88B associée à une première extrémité 36A, 36B du levier est destinée à coopérer avec une contre-came de décalage angulaire 90A, 90B solidaire de la came d'appui 44B, 44A associée à la seconde extrémité 36B, 36A du levier, lorsque la première extrémité 36A, 36B de ce levier est libérée de son flasque associé.

Les cames de décalage angulaire 88A, 88B sont délimitées par des portions de contour des doigts axiaux 80A, 80B, formant des rampes, et les contre-cames de décalage angulaire 90A, 90B sont délimitées par des portions de contour des évidements 84A, 84B de limitation de basculement des leviers, formant des rampes complémentaires des précédentes (voir notamment figures 10 et 11).

On notera que les cames d'entraînement décalé 54a, 54b, solidaires de l'organe de commande 32, ne sont plus nécessaires dans le second mode de réalisation de l'articulation.

L'articulation 20 selon le second mode de réalisation comporte un organe d'entretoisement, non représenté, interposé entre les bagues 42a, 42b.

Cet organe d'entretoisement comporte par exemple un anneau en tôle en acier à ressort ayant un effet élastique axial permettant de maintenir les bagues écartées entre elles tout en les sollicitant contre les flasques respectifs.

On notera qu'il n'est pas nécessaire dans ce seconde mode de réalisation de l'articulation de prévoir un organe de synchronisation du mouvement des leviers.

Le fonctionnement de l'articulation 20 selon le second mode de réalisation présente de nombreuses similitudes avec celui de l'articulation selon le premier mode de réalisation.

On notera cependant les différences suivantes précisées en prenant pour exemple une manoeuvre de rabattement temporaire du dossier (voir figure 10).

Lorsque l'on fait tourner l'organe de commande 32 dans le sens anti-horaire indiqué par une flèche sur la figure 10, la came de dégagement 52 entraîne dans ce même sens la bague inférieure 42a.

La rotation de cette bague 42a provoque d'abord le dégagement des cames d'appui 44A et la libération des extrémités inférieures 36A des leviers, puis la coopération des cames de poussée 86B de cette bague inférieure avec les doigts 80A, 80B des extrémités supérieures 36B des leviers en appui contre le flasque mobile 26, afin de faire basculer les leviers.

Le flasque mobile peut alors tourner librement pour permettre le rabattement du dossier, les leviers étant assujettis à ce flasque.

La libération des extrémités inférieures 36A des leviers provoque une légère rotation dans le sens horaire de la bague supérieure 42b par coopération des rampes de décalage angulaire 88A, associées à ces extrémités inférieures 36A, avec les rampes complémentaires 90A de la bague supérieure 42b.

Cette légère rotation facilite le retour en position de repos des leviers.

Le fonctionnement de l'articulation 20 selon le seconde mode de réalisation dans le cas d'un réglage d'inclinaison du dossier est illustré à la figure 11 et se déduit mutatis mutandis du fonctionnement décrit précédemment dans le cas du rabattement du dossier.

L'invention ne se limite pas aux modes de réalisation illustrés sur les figures.

En particulier, le siège selon l'invention peut être équipé d'une seule articulation telle que décrite précédemment.

L'articulation selon l'invention peut comporter un seul levier de couplage des flasques.

L'articulation illustrée sur les figures comporte des flasques munis de dentures intérieures concaves et des leviers munis de dentures extérieures convexes. Bien entendu, il est possible de réaliser une articulation comportant des flasques munis de dentures extérieures convexes et des leviers munis de dentures intérieures concaves, sans sortir du cadre de l'invention.

L'invention comporte de nombreux avantages.

Dans une articulation selon l'invention, les efforts sont transmis d'un flasque à un autre directement par les leviers de couplage dentés, ce qui réduit les causes de jeu par rapport aux articulations classiques.

Si la fonction de rabattement temporaire du dossier n'est pas souhaitée, il suffit de modifier très légèrement l'articulation selon l'invention pour interdire ce rabattement.

En effet, en comblant un évidement 58A ou 84A de limitation de basculement des leviers de chaque bague, on interdit le basculement des leviers dans leur position autorisant le rabattement temporaire du dossier.

## Revendications

1. Articulation pour siège, notamment pour véhicule automobile, du type comprenant :
- deux flasques (24, 26) sensiblement parallèles dont l'un, fixe, est destiné à être fixé à une assise du siège, et l'autre, mobile, est destiné à être fixé à un dossier du siège, ces flasques étant rotatifs l'un par rapport à l'autre autour d'un axe d'articulation (X) qui leur est perpendiculaire, et
- des moyens (30) de couplage des flasques (24, 26) entre eux commandés par un organe (32) actionnable dans un sens de réglage de l'inclinaison du dossier par rapport à l'assise et dans un sens opposé au précédent de rabattement temporaire de ce dossier,
caractérisée ce que :
les moyens (30) de couplage comprennent au moins un levier (34a, 34b) muni de deux extrémités (36A, 36B) dont chacune est susceptible d'être directement assujettie à un flasque (24, 26) associé par coopération de formes complémentaires (SA, SB, TA, TB), l'organe de commande (32) des moyens de couplage actionnant des moyens (44A, 44B, 52 ; 86A, 86B) de manoeuvre du levier assujettissant le levier à l'un ou l'autre des flasques (24, 26) seulement, selon le sens d'actionnement de l'organe de commande (32), par basculement du levier (34a, 34b) autour d'un point d'appui matérialisé par les formes complémentaires d'assujettissement (SA, SB, TA, TB) de l'une ou l'autre extrémité (36A, 36B) du levier avec son flasque (24, 26) associé.

2. Articulation selon la revendication 1, caractérisée en ce que les moyens de manoeuvre comprennent des moyens (44A, 44B, 46A, 46B) d'assujettissement des extrémités (36A, 36B) du levier aux flasques (24, 26) associés, et des moyens (48a, 48b, 52) de basculement du levier (34a, 34b) entre une position de repos, dans laquelle les deux extrémités (36A, 36B) du levier sont assujetties aux deux flasques (24, 26) associés pour coupler ces derniers, et deux positions alternatives de basculement, dans lesquelles une extrémité (36A, 36B) du levier est assujettie au flasque associé, pour prendre appui sur ce dernier, et l'autre extrémité (36B, 36A) du levier est libérée de ce flasque, de manière à permettre, selon le cas, le réglage de l'inclinaison ou le rabattement temporaire du dossier.

3. Articulation selon la revendication 2, caractérisée en ce que les moyens d'assujettissement des extrémités (36A, 36B) du levier comprennent une came rotative d'appui (44A, 44B) associée à chaque extrémité (36A, 36B) du levier, rappelée élastiquement au contact d'une contre-came d'appui (46A, 46B) solidaire de l'extrémité du levier pour maintenir celle-ci assujettie au flasque (24, 26) associé,
et en ce que les moyens de basculement du levier comprennent des moyens (48a, 48b, 52) de dégagement de la came d'appui associée à l'extrémité (36A, 36B) à libérer du levier, s'opposant à la force élastique de rappel de cette came d'appui, et des moyens (44A, 44B ; 86A, 86B) de poussée de l'extrémité (36B, 36A) en appui du levier.

4. Articulation selon la revendication 3, caractérisée en ce que chaque extrémité (36A, 36B) du levier comprend une butée (56A, 56B ; 80A, 80B) de limitation de basculement destinée à coopérer avec une butée complémentaire (58A, 58B ; 84A, 84B) solidaire d'une came d'appui (44A, 44B).

5. Articulation selon la revendication 3 ou 4, caractérisée en ce que les moyens de poussée d'une extrémité en appui (36A, 36B) du levier comprennent la came d'appui (44A, 44B) associée à cette extrémité en appui coopérant avec la contre-came d'appui (46A, 46B) solidaire de cette même extrémité.

6. Articulation selon la revendication 3 ou 4, caractérisée en ce que les moyens de poussée d'une extrémité en appui (36A, 36B) du levier comprennent une came de poussée (86A, 86B) solidaire de la came d'appui (44B, 44A) associée à l'extrémité (36B, 36A) à libérer du levier, coopérant avec une contre-came de poussée (80A, 80B) solidaire de l'extrémité (36A, 36B) en appui du levier.

7. Articulation selon la revendication 6, caractérisée en ce que chaque extrémité (36A, 36B) du levier comporte une came (88A, 88B) de décalage angulaire de la came d'appui (44B, 44A) associée à l'autre extrémité (36B, 36A) du levier dans le sens de dégagement de cette came d'appui, cette came de décalage angulaire (88A, 88B) coopérant avec une contre-came de décalage angulaire (90A, 90B) solidaire de cette came d'appui (44B, 44A), lorsque l'extrémité (36A, 36B) du levier est libérée de son flasque associé.

8. Articulation selon l'une quelconque des revendications 3 à 7, caractérisée en ce que le levier (34a, 34b) a une forme générale en arc s'étendant sensiblement parallèlement aux flasques (24, 26), les extrémités (36A, 36B) du levier étant décalées l'une par rapport à l'autre parallèlement à l'axe d'articulation (X), les formes complémentaires d'assujettissement (SA, SB, TA, TB) étant ménagées sur les contours extérieurs du levier et sur les contours intérieurs d'épaulements périphériques (38, 40) ménagés dans les flasques (24, 26) et décalés l'un par rapport à l'autre parallèlement à l'axe d'articulation X,
en ce que les cames d'appui (44A, 44B) sont délimitées par des bossages ménagés sur le contour extérieur de bagues rotatives (42a, 42b) associées à chaque extrémité du levier, centrées sensiblement sur l'axe d'articulation (X) et superposées suivant cet axe, les contre-cames d'appui (46A, 46B) étant ménagées sur le contour intérieur du levier (34a, 34b),
et en ce que les moyens de dégagement des cames d'appui comprennent une came de dégagement (52) montée rotative autour de l'axe d'articulation (X) et destinée à coopérer sélectivement avec deux contre-cames de dégagement (48a, 48b) ménagées sur le contour interne des deux bagues (42a, 42b) respectivement, la came de dégagement (52) étant interposée entre les contre-cames de dégagement (48a, 48b) de préférence avec un jeu angulaire de part et d'autre de cette came (52).

9. Articulation selon les revendications 4 et 8 prises ensemble, caractérisée en ce que la butée (58A, 58B) de limitation de basculement associée à une extrémité (36A, 36B) du levier est solidaire de la came d'appui (44A, 44B) associée à cette extrémité du levier,
et en ce que les butées de limitation de basculement (56A, 56B) sont délimitées par des bossages d'extrémité ménagés sur le contour intérieur du levier (34a, 34b), et les butées complémentaires de limitation de basculement (58A, 58B) sont délimitées par des évidements ménagés sur le contour extérieur des bagues (42a, 42b).

10. Articulation selon les revendications 6 et 8 prises ensemble, caractérisée en ce que la butée complémentaire (84A, 84B) de limitation de basculement associée à une extrémité (36A, 36B) du levier est solidaire de la came d'appui (44B, 44A) associée à l'autre extrémité (36B, 36A) du levier,
en ce que les butées de limitation de basculement sont délimitées par des doigts (80A, 80B) portés par des pieds (82A, 82B) prolongeant sensiblement radialement vers l'intérieur les extrémités (36A, 36B) des leviers, et les butées complémentaires de limitation de basculement (84A, 84B) sont délimitées par des évidements ménagés sur le contour extérieur des bagues (42b, 42a), chaque doigt (80A, 80B) s'étendant parallèlement à l'axe d'articulation (X) de manière à rattraper le décalage axial entre l'extrémité (36A, 36B) du levier qui le porte et l'autre extrémité (36B, 36A) de ce levier,
et en ce que les cames de poussée (86A, 86B) sont délimitées par des bossages ménagés sur le contour extérieur des bagues (42b, 42a) et les contre-cames de poussée sont délimitées par les doigts axiaux (80A, 80B).

11. Articulation selon les revendications 7 et 10 prises ensemble, caractérisée en ce que les cames de décalage angulaire (88A, 88B) sont délimitées par des portions de contour des doigts axiaux (80A, 80B), formant des rampes, et les contre-cames de décalage angulaire (90A, 90B) sont délimitées par des portions de contour des évidements de limitation de basculement (84A, 84B), formant des rampes complémentaires des précédentes.

12. Articulation selon l'une quelconque des revendications 8 à 11, caractérisée en ce que les contre-cames de dégagement sont délimitées par des ergots (48a, 48b) d'accrochage d'un ressort (50) de rappel à effet angulaire, sollicitant les bagues (42a, 42b) dans des sens opposés vers des positions de coopération des cames (44A, 44B) et contre-cames (46A, 46B) d'appui.

13. Articulation selon les revendications 5 et 8 prises ensemble, caractérisée en ce que les moyens de poussée d'une extrémité (36A, 36B) en appui du levier comprennent, en outre, des cames (54a, 54b) d'entraînement décalé des bagues (42a, 42b), solidaires de la came de dégagement (52), s'étendant de part et d'autre angulairement de cette came de dégagement, de manière que chaque contre-came de dégagement (48a, 48b) s'étende entre la came de dégagement (52) et une came d'entraînement décalé (54a, 54b) avec un jeu angulaire permettant, lors de la rotation des cames de dégagement et d'entraînement, un entraînement décalé des contre-cames de dégagement (48a, 48b) provoquant, d'abord le dégagement de la came d'appui (44B, 44A) associée à l'extrémité (36B, 36A) à libérer du levier, puis la poussée de l'extrémité (36A, 36B) en appui du levier.

14. Articulation selon l'une quelconque des revendications 8 à 13, caractérisée en ce que les flasques (24, 26) et les bagues (42a, 42b) sont centrés les uns par rapport aux autres par des épaulements circulaires complémentaires (E3 à E8) ménagés dans ces éléments, sensiblement coaxiaux à l'axe d'articulation (X).

15. Articulation selon l'une quelconque des revendications 8 à 14, caractérisée en ce qu'un organe d'entretoisement (60) est interposé entre les bagues (42a, 42b).

16. Articulation selon l'une quelconque des revendications précédentes, caractérisée en ce que les formes complémentaires (SA, SB, TA, TB) d'assujettissement des extrémités (36A, 36B) du levier aux flasques (24, 26) comprennent des dentures complémentaires.

17. Articulation selon les revendications 8 et 16 prises ensemble, caractérisée en ce que chaque extrémité (36A, 36B) du levier comprend un secteur denté d'assujettissement (SA, SB), le secteur denté (SA) d'une première extrémité (36A) du levier étant destiné à coopérer avec un secteur denté de même angle (TA) du flasque fixe (24), et le secteur denté (SB) de la seconde extrémité (36B) du levier étant destiné à coopérer avec un secteur denté (TB) d'angle supérieur du flasque mobile (26).

18. Articulation selon la revendication 17, caractérisée en ce que le secteur denté (TB) du flasque mobile (26) forme une couronne dentée.

19. Articulation selon la revendication 17 ou 18, caractérisée en ce que les extrémités opposées des secteurs dentés (SA, SB) du levier comprennent des zones dentées (ZA, ZB) de renfort d'appui du levier, l'une ou l'autre de ces zones ne coopérant avec le secteur denté (TA, TB) du flasque associé que lorsque le levier est dans l'une ou l'autre de deux positions de basculement.

20. Articulation selon l'une quelconque des revendications précédentes, caractérisée en ce que les moyens de couplage comprennent deux leviers (34a, 34b).

21. Articulation selon la revendication 20, caractérisée en ce que les leviers ainsi que leurs moyens de manoeuvre (44A, 44B, 52 ; 86A, 86B) sont, de façon générale, symétriques par rapport à l'axe d'articulation (X).

22. Articulation selon la revendication 20 ou 21, caractérisée en ce que les extrémités (36A, 36B) rapprochées des leviers sont reliées entre elles par des épingles élastiques (68a, 68b) sollicitant ces extrémités en position d'assujettissement aux flasques (24, 26) associés.

23. Articulation selon la revendication 15 et l'une des revendications 20 à 22, caractérisée en ce que l'organe d'entretoisement (60) forme également organe de synchronisation des leviers (34a, 34b), et comprend à cet effet deux fourches d'extrémité (64a, 64b), diamétralement opposées, destinées à coopérer avec des épaulements (66A, 66B) de décalage axial des extrémités des leviers et avec le contour intérieur des leviers, lorsque ces derniers sont basculés.

24. Articulation selon l'une quelconque des revendications précédentes, caractérisée en ce que les flasques (24, 26) ont une forme générale circulaire et sont centrés l'un par rapport à l'autre par des épaulements périphériques complémentaires (E1, E2) coaxiaux à l'axe d'articulation (X).

25. Articulation selon l'une quelconque des revendications précédentes, caractérisée en ce qu'elle comprend des moyens (76a, 76b) de limitation de la course de réglage d'inclinaison du dossier, et des moyens (70a, 70b, 72) de limitation de la course de rabattement temporaire du dossier.

26. Articulation selon les revendications 8, 20 et 24, les trois étant prises ensemble, caractérisée en ce que les moyens de limitation de la course de réglage d'inclinaison du dossier comprennent une butée (76a, 76b) de limitation d'inclinaison de dossier solidaire du flasque mobile (26) destinée à coopérer avec deux butées complémentaires d'extrémité de course délimitées, l'une par un épaulement (66A) de décalage axial des deux extrémités (36A, 36B) d'un premier levier (34a) et l'autre par l'extrémité (36B) du second levier (34b) associée au flasque mobile (26).

27. Articulation selon la revendication 25 ou 26, caractérisée en ce que les moyens de limitation de la course de rabattement temporaire du dossier comprennent une première butée d'extrémité de course (70a, 70b), solidaire du flasque fixe (24), destinée à coopérer avec l'extrémité (36A) du levier associée à ce flasque fixe, et une seconde butée d'extrémité de course (72), solidaire du flasque mobile (26), destinée à coopérer avec une butée fixe complémentaire (74).

28. Articulation selon les revendications 9 ou 10, caractérisée en ce que, sur chaque bague (42a, 42b), un évidement (58A ; 84A) formant butée complémentaire de limitation de basculement du levier est comblé pour interdire le basculement de ce levier dans sa position autorisant le rabattement temporaire du dossier.

29. Siège pour véhicule automobile caractérisé en ce qu'il comprend au moins une articulation (20) selon l'une quelconque des revendications précédentes.

## Claims

1. Seat articulation, particularly for a motor vehicle, of the type comprising:
- two substantially parallel plates (24, 26) of which one of them, the fixed one, is designed to be fixed to a seat base and the other, the mobile one, is designed to be fixed to a seat backrest, these plates being rotary with respect to each other about an axis of articulation (X) which is perpendicular to them, and
- means (30) of coupling the plates (24, 26) with each other controlled by a member (32) which can be actuated in a direction of adjusting the inclination of the backrest with respect to the base and in a direction, opposite to the preceding one, of temporary folding back of this backrest,
characterised in that :
the means (30) of coupling comprise at least one lever (34a, 34b) provided with two ends (36A, 36B) each of which is capable of being coupled directly to an associated plate (24, 26) by the co-operation of complementary shapes (SA, SB, TA, TB), the control member (32) of the coupling means actuating means (44A, 44B, 52; 86A, 86B) of manoeuvring the lever coupling the lever to one or other of the plates (24, 26) only, depending on the direction of actuation of the control member (32), by pivoting the lever (34a, 34b) about a support point materialised by the complementary shapes (SA, SB, TA, TB) for coupling one or the other end (35A, 36B) of the lever to its associated plate (24, 26).

2. Articulation according to claim 1, characterised in that the manoeuvring means comprise means (44A, 44B, 46A, 46B) of coupling the ends (36A, 36B) of the lever to the associated plates (24, 26), and means (48a, 48b, 52) of pivoting the lever (34a, 34b) between a position of rest, in which the two ends (36A, 36B) of the lever are coupled to the two associated plates (24, 26) in order to couple the latter together, and two alternative pivoting positions, in which one end (36A, 36B) of the lever is coupled to the associated plate in order to bear upon the latter, and the other end (36B, 36A) of the lever is released from this plate, in such a way as to allow, depending on the case, the adjustment of the inclination or the temporary folding back of the backrest.

3. Articulation according to claim 2, characterised in that the means of coupling of the ends (36A, 36B) of the lever comprise an associated rotary support cam (44A, 44B) at each end (36A, 36B) of the lever, elastically returned to contact with a support counter-cam (46A, 46B) integral with the end of the lever in order to maintain the latter coupled to the associated plate (24, 26),
and in that the means of pivoting the lever comprise means (48a, 48b, 52) of disengaging the associated support cam at the end (36A, 36B) of the lever to be released, opposing the elastic return force of this support cam, and thrust means (44A, 44B; 86A, 86B) of the bearing end (36B, 36A) of the lever.

4. Articulation according to claim 3, characterised in that each end (36A, 36B) of the lever comprises a stop (56A, 56B; 80A, 80B) to limit the pivoting and which is designed to co-operate with a complementary stop (58A, 58B; 84A, 84B) integral with a support cam (44A, 44B).

5. Articulation according to claim 3 or 4, characterised in that the thrust means of a bearing end of (36A, 36B) of the lever comprise the support cam (44A, 44B) associated with this bearing end co-operating with the support counter-cam (46A, 46B) integral with this same end.

6. Articulation according to claim 3 or 4, characterised in that the thrust means of a bearing end (36A, 36B) of the lever comprise a thrust cam (86A, 86B) integral with the support cam (44B, 44A) associated with the end (36B, 36A) of the lever to be released, co-operating with a thrust counter-cam (80A, 80B) integral with the bearing end (36A, 36B) of the lever.

7. Articulation according to claim 6, characterised in that each end (35A, 36B) of the lever comprises a cam (88A, 88B) for the angular displacement of the support cam (44B, 44A) associated with the other end (36B, 36A) of the lever in the direction of disengagement of this support cam, this angular displacement cam (88A, 88B) co-operating with an angular displacement counter-cam (90A, 90B) integral with this support cam (44B, 44A), when the end (35A, 36B) of the lever is released from its associated plate.

8. Articulation according to any one of claims 3 to 7, characterised in that the lever (34a, 34b) is generally arc-shaped and extends substantially parallel with the plates (24, 26), the ends (36A, 36B) of the lever being offset with respect to one another in a direction parallel with the axis of articulation (X), the complementary coupling shapes (SA, SB, TA, TB) being formed on the outer contours of the lever and on the inner contours of peripheral shoulders (38, 40) formed in the plates (24, 26) and offset with respect to one another in a direction parallel with the axis of articulation X,
in that the support cams (44A, 44B) are delimited by bosses formed on the outer contour of rotary rings (42a, 42b) associates with each end of the lever, substantially centred on the axis of articulation (X) and superimposed in this axis, the support counter-cams (46A, 46B) being formed on the inner contour of the lever (34a, 34b),
and in that the means of disengagement of the support cams comprise a disengagement cam (52) mounted in a rotary manner about the axis the of articulation (X) and designed to co-operate selectively with two disengagement counter-cams (48a, 48b) formed on the inner contour of the two rings (42a, 42b) respectively, the disengagement cam (52) being interposed between the disengagement counter-cams (48a, 48b) preferably with an angular play on either side of this cam (52).

9. Articulation according to claims 4 and 8 taken together characterised in that stop (58A, 59B) for limiting the pivoting associated with one end (36A, 36B) of the lever is integral with the support cam (44A, 44B) associated with this end of the lever,
and in that the pivoting limit stops (56A, 56B) are delimited by end bosses formed on the inner contour of the lever (34a, 34b), and the complementary pivoting limit stops (58A, 58B) are delimited by recesses formed on the outer contour of the rings (48a, 48b).

10. Articulation according to claims 6 and 8 taken together, characterised in that the complementary pivoting limit stop (84A, 84B) associated with one end (36A, 36B) of the lever is integral with the support cam (44B, 44A) associated with the other end (36B, 36A) of the lever,
and in that the pivoting limit stops are delimited by fingers (80A, 80B) carried by foot-pieces (82A, 82B) extending the ends (36A, 36B) of the levers substantially radially inwards and the complementary pivoting limit stops (84A, 84B) are delimited by recesses formed on the outer contour of the rings (42b, 42a), each finger (80A, 80B) extending parallel with the axis of articulation (X) in such a way as to take up the axial offset between the end (36A, 36B) of the lever which carries it and the other end (36A, 36B) of the this lever,
and in that the thrust cams (86A, 86B) are delimited by bosses formed on the outer periphery of the rings (42b, 42a) and the thrust counter-cams are delimited by the axial fingers (80A, 80B).

11. Articulation according to claims 7 and 10 taken together, characterised in that the angular displacement cams (88A, 88B) are delimited by portions of contour of the axial fingers (80A, 80B) forming ramps, and the angular displacement counter-cams (90A, 90B) are delimited by portions of contour of the pivoting limit recesses (84A, 84B), forming ramps which are complementary to the previous ones.

12. Articulation according to any one of claims 8 to 11, characterised in that the disengagement counter-cams are delimited by stubs (48a, 48b) for attaching a return spring (50) having an angular effect, applying force on the rings (42a, 42b) in opposite directions towards positions of co-operation of the cams (44A, 44B) and support counter-cams (46A, 46B).

13. Articulation according to claims 5 and 8 taken together, characterised in that the thrust means of a bearing end (36A, 36B) of the lever furthermore comprise offset drive cams (54a, 54b) of the rings (42a, 42b), integral with the disengagement cam (52), extending angularly on either side of this disengagement cam, in such a way that each disengagement counter-cam (48a, 48b) extends between the disengagement (52) cam and an offset drive cam (54a, 54b) with an angular play allowing, during the rotation of the disengagement and drive cams, an offset drive of the disengagement counter-cams (48a, 48b) causing, firstly the disengagement of the support cam (44B, 44A) associated with the end (36B, 36A) to be released of the lever, and then the thrusting of the bearing end (36A, 36B) of the lever.

14. Articulation according to any one of claims 8 to 13, characterised in that the plates (24, 26) and the rings (42a, 42b) are centred with respect to each other by complementary circular shoulders (E2 to E8) formed in these elements, which are substantially coaxial with the axis of articulation (X).

15. Articulation according to any one of claims 8 to 14, characterised in that a spacing member (60) is interposed between the rings (42a, 42b).

16. Articulation according to any one of the preceding claims, characterised in that the complementary shapes, (SA, SB, TA, TB) for coupling the ends (35A, 36B) of the lever to the plates (24, 26) comprise complementary sets of teeth.

17. Articulation according to claims 8 and 16 taken together, characterised in that each end (36A, 36B) of the lever comprises a toothed coupling sector (SA, SB), the toothed sector (SA) of a first end (36A) of the lever being designed to co-operate with a toothed sector of the same angle (TA) of the fixed plate (24), and the toothed sector (SB) of the second end (36B) of the lever being intended to co-operate with a toothed sector (TB) of greater angle of the mobile plate (26).

18. Articulation according to claim 17, characterised in that the toothed sector (TB) of the mobile plate (26) forms a toothed crown wheel.

19. Articulation according to claim 17 or 18, characterised in that the opposite ends of the toothed sectors (SA, SB) of the lever comprise toothed zones (ZA, ZB) for reinforcing the support of the lever, one or the other of these zones co-operating with the toothed sector (TA, TB) of the associated plate only when the lever is in one or other of two pivoting positions.

20. Articulation according to any one of the preceding claims, characterised in that the coupling means comprise two levers, (34a, 34b).

21. Articulation according to claim 20, characterised in that the levers and their manoeuvring means (44A, 44B, 52; 86A, 86B) are, in general, symmetrical with respect to the axis of articulation (X).

22. Articulation according claim 20 or 21, characterised in that the close together ends (36A, 36B) of the levers are connected with each other by elastic pins (68a, 68b) forcing these ends into the positions of coupling with the associated plates (24, 26).

23. Articulation according to claim 15 and one of claims 20 to 22, characterised in that the spacing member (60) also forms a device for synchronising the levers (34a, 34b) and comprises, for this purposes, two diametrically opposed end forks (64a, 64b, designed to co-operate with shoulders (66A, 66B) for axial offset of the ends of the levers and with the inner counter of the levers, when the latter are pivoted.

24. Articulation according to any one of the preceding claims, characterised in that the plates (24, 26) have a generally circular shape and are centred with respect to one another by complementary peripheral shoulders (E1, E2) which are coaxial with the axis of articulation (X).

25. Articulation according to any one of the preceding claims, characterised in that it comprises means (76a, 76b) of limitation of the travel for adjustment of the inclination of the backrest and means (70a, 70b, 72) of limitation of the travel of the temporary folding back of the backrest.

26. Articulation according to claims 8, 20 and 24, the three claims being taken together, characterised in that the means of limitation of the travel for adjustment of the inclination of the backrest comprise a stop (76a, 76b) for limiting the inclination of the back rest integral with the mobile plate (26) designed to co-operate with two complementary end-of-travel stops delimited, in one case, by a shoulder (66A) for the axial offset of the two ends (36A, 36B) of a first lever (34a) and, in the other case, by the end (36B) of the second lever (34b) associated with the mobile plate (26).

27. Articulation according to claim 25 or 26, characterised in that the means of limitation of the travel of the temporary folding back of the backrest comprise a first end-of-travel stop (70a, 70b), integral with the fixed plate (24), designed to co-operate with the end (36A) of the lever associated with this fixed plate, and a second end-of-travel stop (72), integral with the mobile plate (26), designed to co-operate with a complementary fixed stop (74).

28. Articulation according to claims 9 or 10, characterised that, on each ring (42a, 42b), a recess (58A; 84A) forming a complementary stop limiting the pivoting of the lever is filled in order to prevent the pivoting of this lever into its position allowing the temporary folding back of the backrest.

29. Seat for a motor vehicle, characterised in that it comprises at least one articulation (20) according to any one of the preceding claims.

## Patentansprüche

1. Gelenkbeschlag insbesondere für Kraftfahrzeugsitz, bestehend aus
- zwei im wesentlichen parallelen Wangen (24, 26), deren eine feststehend ist und dazu bestimmt ist, an einem Sitzelement des Sitzes befestigt zu werden, und deren andere beweglich ist und dazu bestimmt ist, an einer Rückenlehne des Sitzes befestigt zu werden, wobei diese Wangen um eine zu ihnen senkrechte Gelenkachse (X) in Bezug aufeinander drehbar sind, und
- Mitteln (30) zur Kupplung der Wangen (24, 26) miteinander, die durch ein Organ (32) gesteuert werden, das in einer Richtung der Verstellung der Neigung der Rückenlehne bezüglich des Sitzelements und in einer zu dieser entgegengesetzten Richtung des vorübergehenden Herunterklappens der Rückenlehne betätigbar ist,
dadurch gekennzeichnet, daß die Kupplungsmittel (30) mindestens einen Hebel (34a, 34b) mit zwei Enden (36A, 36B) umfassen, deren jedes mit einer zugeordneten Wange (24, 26) durch Zusammenwirken von ergänzenden Formen (SA, SB, TA, TB) direkt fest verbunden werden kann, wobei das Organ (32) zur Steuerung der Kupplungsmittel Mittel (44A, 44B, 52; 86A, 86B) zur Betätigung des Hebels betätigt, die den Hebel je nach der Betätigungsrichtung des Steuerorgans (32) nur mit der einen oder der anderen Wange (24, 26) fest verbinden, und zwar durch Verschwenken des Hebels (34a, 34b) um einen Auflagepunkt, der von den ergänzenden Formen (SA, SB, TA, TB) zur festen Verbindung des einen oder des anderen Endes (36A, 36B) des Hebels mit seiner zugeordneten Wange (24, 26) gebildet wird.

2. Gelenkbeschlag nach Anspruch 1, dadurch gekennzeichnet, daß die Betätigungsmittel Mittel (44A, 44B, 46A, 46B) zur festen Verbindung der Enden (36A, 36B) des Hebels mit den zugeordneten Wangen (24, 26) aufweisen sowie Mittel (48a, 48b, 52) zum Verschwenken des Hebels (34a, 34b) zwischen einer Ruhestellung, in der die beiden Enden (36A, 36B) des Hebels mit den beiden zugeordneten Wangen (24, 26) fest verbunden sind, um diese zu kuppeln, und zwei abwechselnden Schwenkstellungen, in denen ein Ende (36A, 36B) des Hebels mit der zugeordneten Wange fest verbunden ist, um an dieser anzuliegen, und das andere Ende (36B, 36A) des Hebels von dieser Wange freigegeben ist, so daß je nach Fall die Verstellung der Neigung oder das vorübergehende Herunterklappen der Rückenlehne gestattet wird.

3. Gelenkbeschlag nach Anspruch 2, dadurch gekennzeichnet, daß die Mittel zur festen Verbindung der Enden (36A, 36B) des Hebels einen drehbaren Anlagenocken (44A, 44B) aufweisen, der jedem Ende (36A, 36B) des Hebels zugeordnet ist und elastisch in den Kontakt mit einem mit dem Ende des Hebels fest verbundenen Gegenanlagenocken (46A, 46B) zurückgeholt wird, um dieses Ende mit der zugeordneten Wange (24, 26) fest verbunden zu halten,
und daß die Mittel zum Verschwenken des Hebels Mittel (48a, 48b, 52) zum Ausrücken des dem freizugebenden Ende (36A, 36B) des Hebels zugeordneten Anlagenocken aufweisen, die sich der elastischen Rückholkraft dieses Anlagenocken widersetzen, sowie Mittel (44A, 44B; 86A, 86B) zum Andrücken des anliegenden Endes (36B, 36A) des Hebels.

4. Gelenkbeschlag nach Anspruch 3, dadurch gekennzeichnet, daß jedes Ende (36A, 36B) des Hebels einen Anschlag (56A, 56B; 80A, 80B) zur Begrenzung der Schwenkbewegung aufweist, der dazu bestimmt ist, mit einem mit einem Anlageanschlag (44A, 44B) fest verbundenen ergänzenden Anschlag (58A, 58B; 84A, 84B) zusammenzuwirken.

5. Gelenkbeschlag nach Anspruch 3 oder 4, dadurch gekennzeichnet, daß die Mittel zum Andrücken eines anliegenden Endes (36A, 36B) des Hebels den diesem anliegenden Ende zugeordneten Anlagenocken (44A, 44B) umfassen, der mit dem mit diesem Ende fest verbundenen Gegenanlagenocken (46A, 46B) zusammenwirkt.

6. Gelenkbeschlag nach Anspruch 3 oder 4, dadurch gekennzeichnet, daß die Mittel zum Andrücken eines anliegenden Endes (36A, 36B) des Hebels einen Andrücknocken (86A, 86B) aufweisen, der mit dem dem freizugebenden Ende (36B, 36A) des Hebels zugeordneten Anlagenocken (44B, 44A) fest verbunden ist und mit einem mit dem anliegenden Ende (36A, 36B) des Hebels fest verbundenen Gegenandrücknocken (80A, 80B) zusammenwirkt.

7. Gelenkbeschlag nach Anspruch 6, dadurch gekennzeichnet, daß jedes Ende (36A, 36B) des Hebels einen Nocken (88A, 88B) zur Winkelversetzung des dem anderen Ende (36B, 36A) des Hebels zugeordneten Anlagenockens (44B, 44A) in der Richtung der Ausrückung dieses Anlagenockens aufweist, wobei dieser Winkelversetzungsnocken (8A, 88B) mit einem mit diesem Anlagenocken (44B, 44A) fest verbundenen Gegenwinkelversetzungsnocken (90A, 90B) zusammenwirkt, wenn das Ende (36A, 36B) des Hebels von seinem zugeordneten Flansch freigegeben ist.

8. Gelenkbeschlag nach einem der Ansprüche 3 bis 7, dadurch gekennzeichnet, daß der Hebel (34a, 34b) die allgemeine Form eines sich im wesentlichen parallel zu den Wangen (24, 26) erstreckenden Bogens hat, wobei die Enden (36A, 36B) des Hebels parallel zur Gelenkachse (X) gegeneinander versetzt sind, wobei die ergänzenden Formen (SA, SB, TA, TB) für die feste Verbindung auf den Außenumrissen des Hebels und auf den Innenumrissen von Umfangsschultern (38, 40) vorgesehen sind, die in den Wangen (24, 26) gebildet und parallel zur Gelenkachse (X) gegeneinander versetzt sind, daß die Anlagenocken (44A, 44B) durch Erhebungen gebildet werden, die auf dem Außenumriß von drehbaren Ringen (42a, 42b) vorgesehen sind, die jedem Ende des Hebels zugeordnet sind, im wesentlichen auf die Gelenkachse (X) zentriert sind und längs dieser Achse übereinander angeordnet sind, wobei die Gegenanlagenocken (46A, 46B) auf dem Innenumriß des Hebels (34a, 34b) vorgesehen sind,
und daß die Mittel zum Ausrücken der Anlagenocken einen Ausrücknocken (52) aufweisen, der um die Gelenkachse (X) drehbar montiert ist und dazu bestimmt ist, wahlweise mit zwei auf dem Innenumriß der beiden Ringe (42a, 42b) vorgesehenen Gegenausrücknocken (48a, 48b) zusammenzuwirken, wobei der Ausrücknocken (52) zwischen den Gegenausrücknocken (48a, 48b) vorzugsweise mit einem Winkelspiel auf seinen beiden Seiten angeordnet ist.

9. Gelenkbeschlag nach den Ansprüchen 4 und 8 zusammen, dadurch gekennzeichnet, daß der einem Ende (36A, 36B) des Hebels zugeordnete Anschlag (58A, 58B) zur Begrenzung der Schwenkbewegung mit dem diesem Ende des Hebels zugeordneten Anlagenocken (44A, 44B) fest verbunden ist
und daß die Anschläge (56A, 56B) zur Begrenzung der Schwenkbewegung von Enderhebungen gebildet sind, die auf dem Innenumriß des Hebels (34a, 34b) vorgesehen sind, und die ergänzenden Anschläge (58A, 58B) zur Begrenzung der Schwenkbewegung von Aussparungen gebildet sind, die auf dem Außenumriß der Ringe (42a, 42b) vorgesehen sind.

10. Gelenkbeschlag nach den Ansprüchen 6 und 8 zusammen, dadurch gekennzeichnet, daß der einem Ende (36A, 36B) des Hebels zugeordnete ergänzende Anschlag (84A, 84B) zur Begrenzung der Schwenkbewegung mit dem dem anderen Ende (36B, 36A) des Hebels zugeordneten Anlagenocken (44B, 44A) fest verbunden ist
und daß die Anschläge zur Begrenzung der Schwenkbewegung von Fingern (80A, 80B) gebildet werden, die von Füßen (82A, 82A) getragen werden, die die Enden (36A, 36B) der Hebel im wesentlichen radial nach innen verlängern, und die ergänzenden Anschläge (84A, 84B) zur Begrenzung der Schwenkbewegung von Aussparungen gebildet werden, die auf dem Außenumriß der Ringe (42b, 42a) vorgesehen sind, wobei jeder Finger (80A, 80B) sich parallel zur Gelenkachse (X) erstreckt, so daß die axiale Versetzung zwischen dem ihn tragenden Ende (36A, 36B) des Hebels und dem anderen Ende (36B, 36A) dieses Hebels ausgeglichen wird,
und daß die Andrücknocken (86A, 86B) von auf dem Außenumriß der Ringe (42b, 42a) vorgesehenen Erhebungen und die Gegenandrücknocken von den axialen Fingern (80A, 80B) gebildet werden.

11. Gelenkbeschlag nach den Ansprüchen 7 und 10 zusammen, dadurch gekennzeichnet, daß die Winkelversetzungsnocken (88A, 88B) von Schrägen bildenden Umrißabschnitten der axialen Finger (80A, 80B) und die Gegenwinkelversetzungsnocken (90A, 90B) von Umrißabschnitten der Aussparungen (84A, 84B) zur Begrenzung der Schwenkbewegung gebildet werden, die die vorhergehenden Schrägen ergänzende Schrägen bilden.

12. Gelenkbeschlag nach einem der Ansprüche 8 bis 11, dadurch gekennzeichnet, daß die Gegenausrücknocken von Nasen (48a, 48b) zum Einhängen einer Rückholfeder (50) mit Winkeleffekt gebildet werden, die die Ringe (42a, 42b) in entgegengesetzten Richtungen auf Stellungen des Zusammenwirkens der Anlagenocken (44A, 44B) und Gegenanlagenocken (46A, 46B) zu beaufschlagt.

13. Gelenkbeschlag nach den Ansprüchen 5 und 8 zusammen, dadurch gekennzeichnet, daß die Mittel zum Andrücken eines anliegenden Endes (36A, 36B) des Hebels außerdem Nocken (54a, 54b) zur versetzten Mitnahme der Ringe (42a, 42b) umfassen, die mit dem Ausrücknocken (52) fest verbunden sind und sich winkelmäßig zu beiden Seiten dieses Ausrücknocken erstrecken, so daß jeder Gegenausrücknocken (48a, 48b) sich zwischen dem Ausrücknocken (52) und einem Nocken (54a, 54b) zur versetzten Mitnahme mit einem Winkelspiel erstreckt, das bei der Drehung der Ausrück- und Mitnahmenocken eine versetzte Mitnahme der Gegenausrücknocken (48a, 48b) gestattet, die zunächst die Ausrückung des dem freizugebenden Ende (36A, 36B) des Hebels zugeordneten Anlagenockens (44B, 44A) und dann das Andrücken des anliegenden Endes (36A, 36B) des Hebels bewirkt.

14. Gelenkbeschlag nach einem der Ansprüche 8 bis 13, dadurch gekennzeichnet, daß die Wangen (24, 26) und die Ringe (42a, 42b) durch einander ergänzende kreisförmige Schultern (E3 bis E8) zueinander zentriert sind, die in diesen Elementen im wesentlichen koaxial zur Gelenkachse (X) vorgesehen sind.

15. Gelenkbeschlag nach einem der Ansprüche 8 bis 14, dadurch gekennzeichnet, daß ein Abstandsorgan (60) zwischen die Ringe (42a, 42b) eingesetzt ist.

16. Gelenkbeschlag nach einem der vorhergehenden Ansprüche, dadurch gekennzeichnet, daß die ergänzenden Formen (SA, SB, TA, TB) zur festen Verbindung der Enden (36A, 36B) des Hebels mit den Wangen (24, 26) ergänzende Zahnungen aufweisen.

17. Gelenkbeschlag nach den Ansprüchen 8 und 16 zusammen, dadurch gekennzeichnet, daß jedes Ende (36A, 36B) des Hebels einen Zahnsektor (SA, SB) zur festen Verbindung aufweist, wobei der Zahnsektor (SA) eines ersten Endes (36A) des Hebels dazu bestimmt ist, mit einem Zahnsektor (TA) der feststehenden Wange (24) mit demselben Winkel zusammenzuwirken, und der Zahnsektor (SB) des zweiten Endes (36B) des Hebels dazu bestimmt ist, mit einem Zahnsektor (TB) der beweglichen Wange (26) mit einem größeren Winkel zusammenzuwirken.

18. Gelenkbeschlag nach Anspruch 17, dadurch gekennzeichnet, daß der Zahnsektor (TB) der beweglichen Wange (26) einen Zahnkranz bildet.

19. Gelenkbeschlag nach Anspruch 17 oder 18, dadurch gekennzeichnet, daß die einander entgegengesetzten Enden der Zahnsektoren (SA, SB) des Hebels Zahnungsbereiche (ZA, ZB) zur Verstärkung der Anlage des Hebels aufweisen, wobei der eine oder der andere dieser Bereiche mit dem Zahnsektor (TA, TB) der zugeordneten Wange nur zusammenwirkt, wenn der Hebel sich in der einen oder in der anderen von zwei Schwenkstellungen befindet.

20. Gelenkbeschlag nach einem der vorhergehenden Ansprüche, dadurch gekennzeichnet, daß die Kupplungsmittel zwei Hebel (34a, 34b) aufweisen.

21. Gelenkbeschlag nach Anspruch 20, dadurch gekennzeichnet, daß die Hebel sowie ihre Betätigungsmittel (44A, 44B, 52; 86A, 86B) allgemein bezüglich der Gelenkachse (X) symmetrisch sind.

22. Gelenkbeschlag nach Anspruch 20 oder 21, dadurch gekennzeichnet, daß die nahe beieinander liegenden Enden (36A, 36B) miteinander durch elastische Spangen (68a, 68b) verbunden sind, die diese Enden in die Stellung der festen Verbindung mit den zugeordneten Wangen (24, 26) beaufschlagen.

23. Gelenkbeschlag nach Anspruch 15 oder einem der Ansprüche 20 bis 22, dadurch gekennzeichnet, daß das Abstandsorgan (60) auch ein Organ zur Synchronisierung der Hebel (34a, 34b) bildet und zu diesem Zweck zwei diametral entgegengesetzte Endgabeln (64a, 64b) aufweist, die dazu bestimmt sind, mit Schultern (66A, 66B) zur axialen Versetzung der Enden der Hebel und mit dem Innenumriß der Hebel zusammenzuwirken, wenn diese verschwenkt werden.

24. Gelenkbeschlag nach einem der vorhergehenden Ansprüche, dadurch gekennzeichnet, daß die Wangen (24, 26) allgemein kreisförmig sind und durch zur Gelenkachse (X) koaxiale ergänzende Umfangsschultern (E1, E2) zueinander zentriert werden.

25. Gelenkbeschlag nach einem der vorhergehenden Ansprüche, dadurch gekennzeichnet, daß er Mittel (76a, 76b) zur Begrenzung des Neigungsverstellungswegs der Rückenlehne und Mittel (70a, 70b, 72) zur Begrenzung des Wegs der vorübergehenden Herunterklappung der Rückenlehne aufweist.

26. Gelenkbeschlag nach den Ansprüchen 8, 20 und 24 zusammen, dadurch gekennzeichnet, daß die Mittel zur Begrenzung des Neigungsverstellungswegs der Rückenlehne einen Anschlag (76a, 76b) zur Begrenzung der Neigung der Rückenlehne aufweisen, der mit der beweglichen Wange (26) fest verbunden ist und dazu bestimmt ist, mit zwei ergänzenden Wegendanschlägen zusammenzuwirken, deren einer durch eine Schulter (66A) zur axialen Versetzung der beiden Enden (36A, 36B) eines ersten Hebels (34a) und deren anderer durch das der beweglichen Wange (26) zugeordnete Ende (36B) des zweiten Hebels (34b) gebildet wird.

27. Gelenkbeschlag nach Anspruch 25 oder 26, dadurch gekennzeichnet, daß die Mittel zur Begrenzung des Wegs der vorübergehenden Herunterklappung der Rückenlehne einen ersten Wegendanschlag (70a, 70b) aufweisen, der mit der feststehenden Wange (24) fest verbunden ist und dazu bestimmt ist, mit dem dieser feststehenden Wange zugeordneten Ende (36A) des Hebels zusammenzuwirken, sowie einen zweiten Wegendanschlag (72), der mit der beweglichen Wange (26) fest verbunden ist und dazu bestimmt ist, mit einem ergänzenden feststehenden Anschlag (74) zusammenzuwirken.

28. Gelenkbeschlag nach den Ansprüchen 9 oder 10, dadurch gekennzeichnet, daß auf jedem Ring (42a, 42b) eine einen ergänzenden Anschlag zur Begrenzung der Verschwenkung des Hebels bildende Aussparung (58A; 84A) ausgefüllt ist, um das Verschwenken dieses Hebels in seine das vorübergehende Herunterklappen der Rückenlehne zulassende Stellung zu sperren.

29. Kraftfahrzeugsitz, dadurch gekennzeichnet, daß er mindestens einen Gelenkbeschlag (20) nach einem der vorhergehenden Ansprüche aufweist.
